# FASCICULE DE BREVET EUROPEEN

(11) **EP 2 429 752 B1**
(45) Date de publication et mention de la délivrance du brevet: **18.09.2019**
(21) Numéro de dépôt: 10723636.6
(22) Date de dépôt: 03.05.2010
(51) Int. Cl.: B23K 20/12, B23K 31/00, C21D 9/50, C22F 1/057, B23K 20/24

(54) **PROCEDE D'ASSEMBLAGE PAR SOUDAGE DE PIECES EN ALLIAGE D'ALUMINIUM AVEC DEFORMATION A FROID SUIVI D'UN REVENU POST SOUDAGE DE L'ENSEMBLE DE LA ZONE SOUDEE ; ASSEMBLAGE CORRESPONDANT**
VERFAHREN ZUR MONTAGE VON ALUMINIUMLEGIERUNGSTEILEN MITTELS SCHWEISSEN, EINSCHLIESSLICH KALTVERFORMUNG UND ANSCHLIESSENDEM TEMPERN DES GESAMTEN SCHWEISSBEREICHS ; ENTSPRECHENDE VERBINDUNG
METHOD OF ASSEMBLING PARTS MADE OF AN ALUMINUM ALLOY BY WELDING, COMPRISING COLD DEFORMATION FOLLOWED BY THE POST-WELDING TEMPERING OF THE ENTIRE WELDED AREA ; CORRESPONDING ASSEMBLY

(30) Priorité: 13.05.2009 FR 0902299; 20.05.2009 US 179869 P
(43) Date de publication de la demande: 21.03.2012
(73) Titulaire: Constellium Issoire, 63500 Issoire (FR)
(72) Inventeur: BORDESOULES, Isabelle, F-63500 Issoire (FR); DANIELOU, Armelle, F-73360 Les Echelles (FR); HENON, Christine, F-38360 Claix (FR); LEQUEU, Philippe, F-38120 St Egrève (FR)
(74) Mandataire: Constellium - Propriété Industrielle
(86) Numéro de dépôt international: PCT/FR2010/000343
(87) Numéro de publication internationale: WO 2010/130887

(56) Documents cités:
- EP-A1- 0 227 563
- EP-B1- 1 799 391
- FR-A1- 2 868 084
- US-A1- 2005 224 562
- US-A1- 2007 138 236
- US-A1- 2007 138 239

## Description

### Domaine de l'invention

L'invention concerne un procédé d'assemblage de pièce en alliage d'aluminium et d'un assemblage par soudage conformément au préambule des revendications 1 et 11 (voir, par exemple, EP1799391), particulièrement le soudage par friction malaxage, de pièces en alliage d'aluminium durcissable par traitement thermique et particulièrement d'alliages durcis par un traitement thermomécanique comportant une mise en solution, une trempe, une déformation à froid et un revenu.

### Etat de la technique

Dans la fabrication des structures métalliques, notamment de structures métalliques destinées à la construction aéronautique, le soudage peut remplacer des techniques plus traditionnelles d'assemblage telles que le rivetage. Les méthodes de soudage permettent d'assembler rapidement les pièces sans réaliser d'orifice, ces derniers étant fréquemment des sites d'initiation de fissures. On connait des méthodes de soudage dans lesquelles une fusion des matériaux est réalisée, telles que, notamment, le soudage oxyacétylénique avec métal d'apport, le soudage à l'arc avec électrodes non fusibles (TIG), le soudage à l'arc avec fil électrodes fusibles ou soudage semi-automatique (MIG), le soudage laser, le soudage plasma, le soudage par faisceau d'électrons. On connait également des méthodes de soudage en phase solide telles que le soudage par friction-malaxage (en anglais Friction Stir Welding (FSW)) ou le soudage par friction.
Malheureusement, un certain nombre de problèmes ont limité l'utilisation du soudage notamment dans la construction aéronautique.
Un premier problème généralement rencontré avec les pièces soudées est la diminution de la résistance mécanique du joint soudé par rapport au métal éloigné de la zone soudée. Ainsi, on obtient typiquement un niveau de limite d'élasticité dans la zone soudée égal à environ 60 % de la limite d'élasticité du métal utilisé.
Un second problème généralement rencontré est l'augmentation de la sensibilité à la corrosion dans la zone soudée.

Encore un autre problème rencontré est la microstructure dans la zone soudée, par exemple le grossissement anormal des grains quand la mise en solution est réalisée après soudage.
De façon à résoudre le problème de corrosion, on a proposé de protéger la zone soudée.
La demande US 2008/047222 (Lockheed Martin) enseigne le dépôt par vaporisation à froid sur le joint soudé FSW d'un matériau pour inhiber la corrosion.
La demande WO 2004/014593 (Eclipse Aviation) enseigne l'application d'une couche de matériau d'étanchéité, tel qu'un matériau d'étanchéité/adhésif monomère, sur les surfaces à assembler de manière à former in situ un joint étanche polymère grâce à la chaleur de soudage de façon à protéger l'organe contre la corrosion aux soudures.
Cependant, avec ce type de méthode de protection, le joint soudé reste sensible à la corrosion et un défaut du revêtement est toujours possible, en particulier pour des assemblages de forme complexe.
Diverses séquences de traitements thermiques pré-soudage ou post-soudage ont été proposées pour améliorer les propriétés finales du joint soudé ou de l'assemblage soudé.
Le brevet EP1625242 (Alcan Rhenalu) enseigne un procédé dans lequel les éléments à souder sont soumis avant soudage à un traitement thermique, à une température T d'une durée d'au moins 2t1, t1 étant définie comme la durée minimale d'un traitement à la température T conduisant à une énergie spécifique du pic de fusion, définie par AED, de moins de 1 J/g.
Le brevet EP1799391 (Alcan Rhenalu) enseigne un procédé dans lequel on réalise un pré-revenu avant soudage sur l'un des membres de l'assemblage soudé de façon à obtenir un élément de structure comprenant au moins deux parties en alliage d'aluminium présentant différents compromis de propriété.
Le brevet US6168067 (Mc Donnell Douglas) enseigne un procédé dans lequel on réalise l'étape de soudage sur des pièces ayant été mises en solution et trempées et se trouvant dans un état métallurgique incomplet et on réalise après soudage un traitement thermique de précipitation complémentaire.
Le brevet EP 1334793 (Boeing) enseigne un procédé de soudage par friction malaxage dans lequel on chauffe l'outil de soudage avant la réalisation du joint soudé et on réalise un traitement de mise en solution et trempe de l'ensemble soudé.
La demande de brevet US2007/0138239 (Sumitomo Light Metals) enseigne un procédé d'assemblage par soudage par friction malaxage dans lequel les pièces sont assemblées à l'état T4 et dans lequel un traitement de réversion est pratiqué avant ou après l'étape d'assemblage. Il faut noter que le traitement de réversion a une durée maximale de 300 s.

La demande de brevet FR 2 868 084 A1 (Pechiney Rhenalu) enseigne un procédé comprenant les étapes de a) mise en solution d'un demi-produit, b) éventuellement traction contrôlée, c) traitement de revenu. L'aspect principal de l'invention selon cette demande est de réaliser le traitement de revenu dans un four à gradient thermique. Cette demande enseigne la réalisation du procédé revendiqué sur un assemblage soudé, ce qui conduit à la mise en solution et le revenu de l'assemblage soudé, ou sur les pièces avant soudage.

Par ailleurs, il est connu d'introduire des contraintes en compression en surface du joint soudé, par des techniques telles que le brunissage (« burnishing ») et martelage à billes (« shot peening ») pour améliorer ses propriétés de tenue en fatigue et de résistance à la corrosion.
Dans la demande WO 03/082512 (Surface Technology) ou la demande correspondante US2005/0224562 A1 il est proposé un procédé, destiné aux assemblage de métaux tels que l'aluminium, le titane ou l'acier, qui utilise un appareil de soudage possédant un outil de soudage et un outil de compression permettant d'induire lors de la dernière étape du procédé une couche de contrainte de compression résiduelle superficielle le long de la surface de la ligne de soudure et d'appliquer à toutes régions thermomarquées une quantité spécifiée d'écrouissage à froid et de trempe superficielle.

Dans ce dernier document, le problème spécifique d'ajout d'une opération de soudage au sein du procédé d'élaboration d'alliages d'aluminium durcis par un traitement thermomécanique comportant successivement une mise en solution, une trempe, une déformation à froid et un revenu n'est pas envisagé.

Ainsi, pour certains alliages d'aluminium, notamment de la série 2XXX, les propriétés optimales sont obtenues après un traitement thermomécanique de ce type. L'état métallurgique obtenu est un état défini comme T8 dans la norme EN 515. Cette désignation s'applique aux produits mis en solution, écrouis puis revenus qui après mise en solution subissent un écrouissage pour améliorer leur résistance mécanique ou pour lesquels l'effet de l'écrouissage associé au planage ou au dressage se traduit sur les limites de caractéristiques mécaniques. Parmi les alliages pour lesquels l'état T8 est particulièrement favorable, on note plusieurs alliages de la série 2XXX et en particulier les alliages aluminium cuivre lithium.

La demande de brevet EP 0 227 563 A1 (CEGEDUR) enseigne pour les alliages d'aluminium contenant du lithium un traitement de sous-revenu spécifique permettant la désensibilisation à la corrosion exfoliante.

Le procédé d'assemblage par soudage de ces produits pose des problèmes spécifiques car il faut notamment d'établir à quel stade il convient de réaliser l'étape de soudage par rapport aux diverses étapes du procédé de mise en solution, trempe, écrouissage et revenu.

On peut par exemple réaliser l'opération de soudage sur des pièces à l'état T3 ou à l'état T8, comme cela est décrit dans le brevet US5259897 (Martin Marietta).
Bien que les résultats obtenus soient en général relativement satisfaisants en termes de résistance mécanique ou de corrosion, il serait utile pour certaines applications d'améliorer encore les performances obtenues pour le joint soudé, notamment en termes de résistance mécanique et de résistance à la corrosion.

La présente invention cherche à résoudre le problème du soudage des alliages d'aluminium, notamment dont l'état métallurgique final est T8, de façon à améliorer les propriétés des joints soudés notamment en termes de résistance mécanique, de résistance à la corrosion et de microstructure de la zone soudée.

### Objet de l'invention

Un premier objet de l'invention est un procédé d'assemblage de pièces en alliage d'aluminium tel que défini dans la revendication 1, dans lequel
(i) on approvisionne au moins une première pièce en alliage d'aluminium dans un état mis en solution, trempé, optionnellement écroui, et vieilli naturellement à température ambiante ou ayant subi un pré-revenu, et au moins une seconde pièce en alliage d'aluminium,
(ii) on soude les dites pièces pour obtenir un assemblage soudé présentant une zone soudée,
(iii) on réalise une déformation à froid comprise entre 0,3 et 5 % de l'ensemble de ladite zone soudée,
(iv) on réalise un revenu post-soudage de l'assemblage soudé ainsi déformé pour obtenir un état métallurgique final,
les conditions de revenu étant une température de 120 à 200 °C pendant une durée de 10 à 60 heures, et
si l'état métallurgique de la première pièce au moins est un état pré-revenu, l'état métallurgique, obtenu après le revenu post-soudage, est le résultat du pré-revenu de la première pièce au moins et du revenu post-soudage.

Un autre objet de l'invention est un assemblage soudé tel que défini dans la revendication 11 comprenant des pièces en alliage d'aluminium susceptible d'être obtenu par le procédé selon l'invention, ledit procédé comprenant les étapes de déformation à froid comprise entre 0,3 et 5 % de l'ensemble de la zone soudée et de revenu post-soudage de l'assemblage soudé ainsi déformé pour obtenir un état métallurgique final,
procédé dans lequel
(iii) on réalise une déformation à froid comprise entre 0,3 et 5 % de l'ensemble de ladite zone soudée,
(iv) on réalise un revenu post-soudage de l'assemblage soudé ainsi déformé pour obtenir un état métallurgique final,
si l'état métallurgique d'au moins une première pièce est un état pré-revenu, l'état métallurgique, obtenu après le revenu post-soudage, est le résultat du pré-revenu de la première pièce au moins et du revenu post-soudage.

Encore un autre objet de l'invention est l'utilisation d'un assemblage soudé selon l'invention pour la réalisation d'un véhicule de transport, voir les revendications 15 et 16.

### Description des figures

La figure 1 montre la structure de la zone de soudure obtenue par soudage par friction-malaxage. (14a) : premier membre, (14b) : second membre, (16) : zone affectée thermomécaniquement, (18) : zone affectée thermiquement, (19) : noyau, (21) : limites de la zone soudée.
La figure 2 montre la structure de la zone de soudure obtenue par soudage par friction-malaxage pour des produits de départ plus épais.
La figure 3 montre la courbe de micro-dureté dans la zone soudée pour les échantillons 1 et 4.
La figure 4 montre la courbe de micro-dureté dans la zone soudée pour les échantillons 10, 11 et 12.

### Description détaillée de l'invention

La désignation des alliages se fait en conformité avec les règlements de The Aluminium Association (AA), connus de l'homme du métier. Les définitions des états métallurgiques sont indiquées dans la norme européenne EN 515.
Sauf mention contraire, les caractéristiques mécaniques statiques, en d'autres termes la résistance à la rupture Rm, la limite d'élasticité conventionnelle à 0,2% d'allongement Rp0,2 et l'allongement à la rupture A, sont déterminées par un essai de traction selon la norme EN 10002-1, le prélèvement et le sens de l'essai étant définis par la norme EN 485-1. L'invention concerne la réalisation d'assemblages soudés comprenant au moins une pièce en alliage d'aluminium à durcissement par traitement thermique qui, après mise en solution, subit un écrouissage notamment pour la détensionner et/ou améliorer ses propriétés mécaniques. L'invention est particulièrement avantageuse pour les assemblages soudés comprenant au moins une pièce en alliage d'aluminium à durcissement par traitement thermique qui, après mise en solution, subit un écrouissage pour améliorer la résistance mécanique, ou pour laquelle l'effet de l'écrouissage associé au planage ou au dressage se traduit sur les limites de caractéristiques mécaniques, c'est-à-dire dont l'état métallurgique final est connu comme état T8 ou T8X, le deuxième chiffre après le 8 pouvant être utilisé pour indiquer des quantités croissantes d'écrouissage après mise en solution ou pour certains états particuliers du type T8, le deuxième chiffre pouvant être utilisé pour indiquer différents niveaux de sous-revenu.

Dans le procédé selon l'invention, on approvisionne au moins une première pièce en alliage d'aluminium dans un état mis en solution, trempé, optionnellement écroui, et vieilli naturellement à température ambiante ou ayant subi un pré-revenu, et au moins une seconde pièce en alliage d'aluminium. Conformément à l'invention, si l'état métallurgique de la première pièce est un état vieilli naturellement à température ambiante, il s'agit d'un un état métallurgique T3 (mis en solution, écroui et mûri jusqu'à obtention d'un état pratiquement stable) ou T4 (mis en solution et mûri jusqu'à obtention d'un état pratiquement stable). Si l'état métallurgique de la première pièce est un état pré-revenu, il s'agit d'un état qui ne correspond pas à l'état métallurgique final mais d'un état tel que l'état métallurgique final, obtenu après le revenu post-soudage, est le résultat du pré-revenu et du revenu post-soudage.

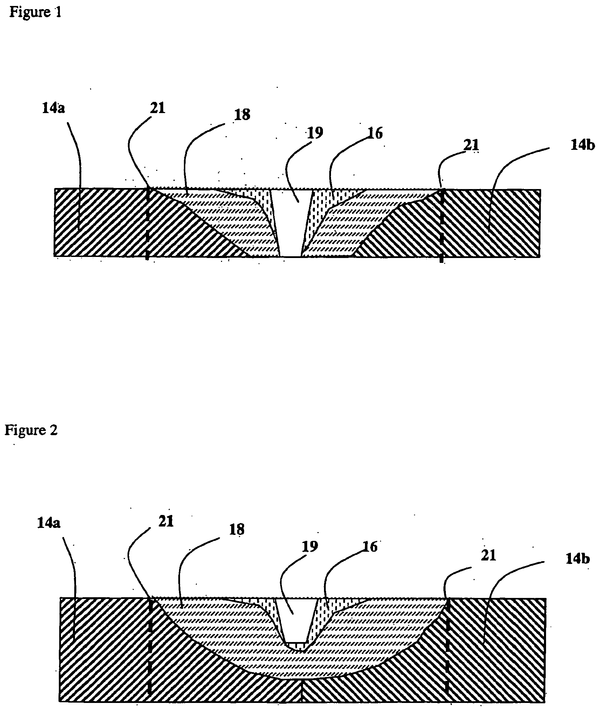

On approvisionne également au moins une seconde pièce en alliage d'aluminium. De manière avantageuse, la seconde pièce est dans un alliage de la même série que la première pièce. De manière préférée, la seconde pièce est dans le même alliage et le même état métallurgique que la première pièce.
Les pièces approvisionnées sont alors positionnées et soudées. Il peut s'agir de pièces planes ou rectilignes telles que des tôles ou des profilés ou de pièces ayant déjà subi une opération de mise en forme de façon à former par exemple un fuselage d'aéronef. Les pièces peuvent avoir la même épaisseur ou une épaisseur différente. L'assemblage de pièces d'épaisseurs différentes est avantageux car il permet de limiter la génération de copeaux d'aluminium lors de finition par usinage de l'assemblage soudé. On peut utiliser une forme des pièces favorisant le positionnement relatif, telle que par exemple des rainures, encoches et excroissances complémentaires. On peut également souder les pièces bout à bout, en angle ou par tout mode habituel de soudage.
Les méthodes de soudage dans lesquelles une fusion des matériaux est réalisée, telles que, notamment, le soudage oxyacétylénique avec métal d'apport, le soudage à l'arc avec électrodes non fusibles (TIG), le soudage à l'arc avec fil électrodes fusibles ou soudage semi-automatique (MIG), le soudage laser, le soudage plasma, le soudage par faisceau d'électrons peuvent être utilisées dans le cadre de l'invention. On préfère cependant les méthodes de soudage en phase solide. Le soudage par friction-malaxage est une méthode de soudage préférée, notamment car l'absence de fil d'apport permet de réaliser des traitements thermomécaniques optimisés pour les alliages en présence tant dans la zone soudée que dans le métal de base.
A l'issue de l'opération de soudage on définit une zone soudée comprenant le noyau de la soudure et de la zone affectée thermiquement par le soudage. La largeur de la zone soudée peut par exemple être déterminée par des mesures de micro-dureté en surface du joint soudé. Dans le cadre de la présente invention, on considère que la zone soudée s'étend sur toute l'épaisseur des matériaux assemblés, même si dans certains cas la zone ainsi définie inclut une zone qui n'est pas affectée thermiquement, comme cela est illustré par les Figures 1 et 2.
La Figure 1 illustre un exemple de structure métallurgique à l'intérieur et autour d'une zone soudée par friction-malaxage entre deux pièces en alliage d'aluminium, identiques ou différentes (14a et 14b). En dehors des zones éloignées de la soudure qui restent totalement non affectées, on peut distinguer 3 zones distinctes,
- (19) : la zone affectée par la déformation plastique la plus sévère est appelée le « noyau ». Le noyau est la zone malaxée, déformée plastiquement et recristallisée à grains fins. La température y est la plus élevée au cours du soudage, comprise entre 470 et 580°C, elle varie notamment suivant les alliages, les épaisseurs à souder, et les paramètres de soudage utilisés.
- (16) : la deuxième zone sur chaque côté du noyau est la zone affectée thermomécaniquement (ZATM). Il s'agit de la zone frontière entre le noyau et la zone affectée thermiquement, qui a été moins déformée que le noyau, et qui peut présenter des signes de recristallisation.
- (18) : la zone affectée thermiquement (ZAT) entoure les zones déformées plastiquement précédentes et subit des transformations métallurgiques liées à la température accrue (en particulier, précipitation).
La zone de soudure considérée dans le cadre de la présente invention est délimitée par les limites (21), déterminées en surface, par exemple par mesure de micro-dureté, et s'étendant dans toute l'épaisseur des pièces.
Ainsi, dans la Figure 2, les matériaux sont épais par rapport à la dimension du noyau, mais on considère cependant que la zone soudée s'étend dans toute l'épaisseur des matériaux.

Selon l'invention on réalise une déformation à froid comprise entre 0,3 et 5 % de l'ensemble de la zone soudée. La déformation à froid peut notamment être réalisée parallèlement à la direction de la ligne de soudure et/ou perpendiculairement, par compression et/ou traction et/ou laminage. Un aspect essentiel de l'invention est que cette déformation à froid soit réalisée en combinaison avec un traitement de revenu ultérieur de l'assemblage soudé.

Dans un premier mode de réalisation avantageux, on réalise cette déformation à froid par traction contrôlée de l'assemblage soudé. Une géométrie d'assemblage soudé permettant la réalisation de la déformation à froid par traction contrôlée est une géométrie dans laquelle, soumis à une traction contrôlée, l'ensemble de l'assemblage soudé subi une déformation sensiblement égale. Les forces de traction sont de préférence appliquées parallèlement à la direction de la ligne de soudure. Ainsi, dans ce premier mode de réalisation, la déformation à froid comprise entre 0,3 et 5% est réalisée non seulement sur la zone soudée mais également sur les autres zones de l'assemblage soudé.

Dans ce mode de réalisation, il est avantageux que ladite première pièce soit avant soudage dans un état métallurgique T4 ou dans un état métallurgique T3 faiblement écroui, un écrouissage de moins de 1% est préféré. De manière préférée, la déformation à froid de l'assemblage soudé réalisée par traction contrôlée dans ce mode de réalisation est comprise entre 2 et 4%.

Dans un second mode de réalisation avantageux on réalise cette déformation à froid comprise entre 0,3 et 5% localement typiquement par compression. La déformation à froid locale dans ce second mode de réalisation consiste essentiellement à déformer la zone soudée.
Ce second mode de réalisation est notamment utilisé quand la géométrie de l'assemblage soudé ne permet pas de réaliser une déformation par traction contrôlée dans des conditions satisfaisantes. Ce procédé a l'inconvénient de nécessiter de nombreuses étapes de compression successives, mais l'avantage de pouvoir être appliqué dans la plupart des cas.
Dans ce second mode de réalisation, il est avantageux que ladite première pièce soit avant soudage dans un état métallurgique T3, de façon à ce que le métal de base présente avant soudage l'écrouissage permettant d'obtenir l'état métallurgique final souhaité. De manière avantageuse, l'écrouissage réalisé avant soudage dans ce second mode de réalisation est compris entre 2 et 5%. Les présents inventeurs ont constaté que de manière surprenante même une faible déformation de la zone soudée par compression permet d'améliorer significativement la résistance à la corrosion du joint soudé. Pour les taux de déformation les plus faibles, inférieurs à 0,6%, les présents inventeurs ont observé que lors du test Mastmaasis, la corrosion intergranulaire pouvait dans certains cas être observée en profondeur dans le noyau de la soudure. Avantageusement, la déformation à froid réalisée localement après soudage dans ce second mode de réalisation est donc comprise entre 0,6 et 2 %.

Le procédé selon l'invention est particulièrement avantageux lorsque au moins la première pièce est en alliage d'aluminium de la série 2XXX, préférentiellement s'il est choisi dans la liste constituée de AA2022, AA2094, AA2098, AA2198, AA2195, AA2196, AA2050, AA2039, AA2124, AA2139, AA2219 et AA2297.
D'une manière générale, le procédé selon l'invention est avantageux lorsque au moins la première pièce est en alliage d'aluminium Al-Cu-Li de la série 2XXX, comprenant préférentiellement 2 à 5 % en poids de cuivre et 0,8 à 2,5 % en poids de lithium. D'une manière avantageuse l'alliage Al-Cu-Li utilisé contient également 0,1 à 0,6% en poids d'argent et 0,1 à 1% en poids de magnésium.

Dans une étape postérieure à la déformation à froid de l'assemblage soudé, on réalise un revenu post-soudage pour obtenir un état métallurgique final. L'état métallurgique final de ladite première pièce est de préférence un état T8 ou T8X mais d'autres états métallurgiques sont envisageables notamment les états T7X51 dans le cas des alliages 7XXX. Les conditions de revenu sont une température de 120 à 200 °C, préférentiellement de 140 à 200 °C et de manière encore plus préférée de 140 à 165 °C, pendant une durée de 10 à 60 heures. Par conditions de revenu, il est entendu qu'au moins une étape d'un revenu pouvant comprendre plusieurs étapes répond aux conditions de durée et de température indiquées.
Dans le cadre du premier mode de réalisation, on peut ainsi par exemple obtenir un état métallurgique final T86 en réalisant une déformation par écrouissage de 4% avant soudage, une déformation par traction contrôlée de 2% après soudage et un revenu approprié.

La microstructure métallurgique de la zone soudée des assemblages obtenus par le procédé selon l'invention est différente de celle des produits selon l'art antérieur. Les présents inventeurs pensent que la réalisation d'une déformation à froid après soudage suivie d'un revenu permet de générer dans la zone soudée une microstructure, notamment de précipitation, favorable tant pour les propriétés mécaniques que pour la résistance à la corrosion. Cependant une description quantifiée de cette microstructure est délicate et dépend notamment des alliages utilisés.

Avantageusement, pour un assemblage soudé selon l'invention, la résistance à la corrosion selon le test Mastmaasis, effectué d'après la norme ASTM G85 A2 n'est pas inférieure à EA sans présence de corrosion intergranulaire, ce résultat étant observé en surface mais aussi quelle que soit la profondeur d'observation sous la surface, notamment à coeur du joint soudé.

De façon avantageuse, le coefficient d'efficacité du joint, qui est le rapport entre la résistance à la rupture du joint soudé sollicité perpendiculairement à la direction de soudure et celle de la tôle non soudée ou dans une zone éloignée de la zone soudée, est d'au moins 70% et de préférence au moins 85% pour les assemblages soudés selon l'invention. L'assemblage soudé selon l'invention peut également être distingué en ce que de manière avantageuse la micro-dureté Vickers dans la zone soudée est inférieure d'un facteur d'au plus 20% à la micro-dureté dans la zone non soudée lorsque les pièces assemblées sont en alliage choisi dans la liste constituée de AA2022, AA2094, AA2098, AA2198, AA2195, AA2196, AA2050, AA2039, AA2124, AA2139, AA2219 et AA2297.

Par exemple, pour le soudage par friction malaxage de pièces en alliage AA2050 avec le procédé selon l'invention, la micro-dureté dans la zone soudée, de la ZAT et de la ZATM est inférieure de moins de 20% à celle dans la zone non soudée et la résistance à la corrosion du noyau et de la zone affectée thermiquement est au moins EA selon le test Maastmasis.

Les assemblages soudés selon l'invention sont utiles pour la fabrication de véhicules de transport, en particulier pour la réalisation de panneaux ou de profilés. En particulier, les assemblages selon l'invention sont utiles pour la fabrication de véhicules ferroviaires, de véhicules de transport public, de transport maritime, de véhicules automobiles et de véhicules aériens. Les assemblages soudés selon l'invention trouvent des applications particulièrement avantageuses dans la construction aéronautique en ce qui concerne la fabrication d'éléments de structure. Le terme « élément de structure » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Il s'agit typiquement d'une pièce mécanique dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

### Exemples

### Exemple 1

Dans cet exemple on a utilisé des tôles d'épaisseur 20 mm en alliage AA2050 à l'état T34, c'est-à-dire tractionnées après trempe d'environ 4%. Les tôles, positionnées bord à bord dans le sens long, ont été soudées par soudage par friction malaxage sur une profondeur d'environ 16 mm.

Certains assemblages soudés ont ensuite subi une traction de 2,5% dans une direction parallèle à la ligne de soudure.

Les assemblages soudés ont ensuite subi un traitement thermique de revenu à 155 °C d'une durée comprise entre 12h et 24h. Pour référence, un assemblage ayant subi une traction de 2,5% n'a pas subi de revenu.

Les assemblages soudés ainsi obtenus ont été caractérisés par des essais de traction dans le sens long (parallèlement à la direction de la ligne de soudure), par des mesures de micro-dureté, par des essais de corrosion sous tension (ASTM G44 et G49) sens TL (perpendiculairement à la direction de la ligne de soudure), et par des essais de corrosion feuilletante selon le test Mastmaasis (norme ASTM G85 A2, conditions « dry bottom »).

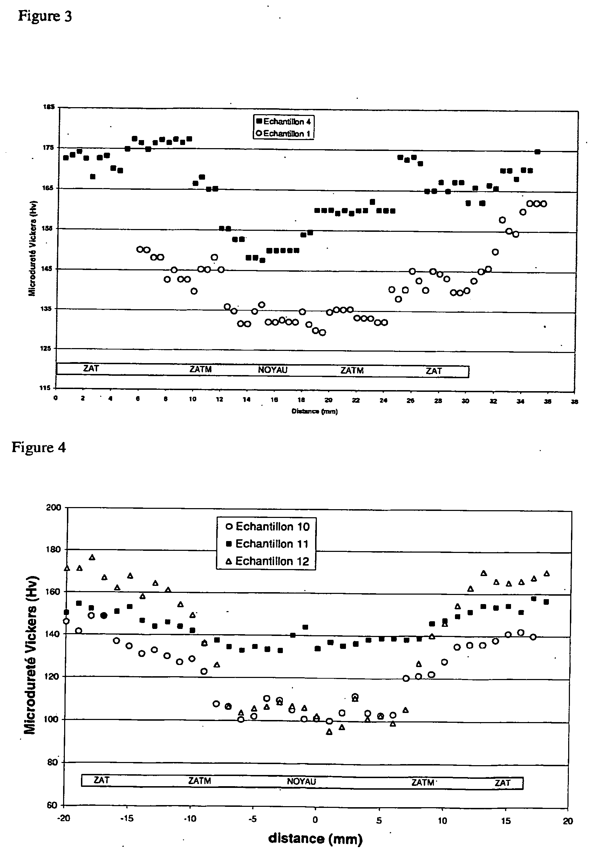

Les résultats obtenus pour les essais mécaniques sont présentés dans le Tableau 1. Les échantillons 1 et 2 sont des exemples de référence, les échantillons 3, 4 et 5 sont des exemples selon l'invention. Les courbes de micro-dureté dans la zone soudée sont comparées pour les échantillons 1 et 4 sur la figure 3. Les exemples selon l'invention présentent des propriétés mécaniques (Rm, R_{p0,2}) améliorées dans la zone soudée. La micro-dureté Vickers de la zone soudée est inférieure d'environ 15% à celle de la zone non soudée pour l'échantillon selon l'invention alors qu'elle est inférieure d'environ 25% pour l'échantillon de référence. De plus les échantillons selon l'invention ne présentent pas de corrosion intergranulaire.

**Tableau 1. Caractéristiques mécaniques obtenues sur les différents échantillons d'assemblages soudés.**

| Echantillon | Taux de traction après soudage : | Revenu | Echantillon centré sur le cordon de soudure (sens L) L0=40 mm | | | Echantillon dans le métal de base (sens L) L0=40 mm | | |
|---|---|---|---|---|---|---|---|---|
| | | | Rm (MPa) | Rp0.2 (MPa) | A. (%) | Rm (MPa) | Rp0.2 (MPa) | A. (%) |
| 1 | 0% | 18h 155°C | 427 | 305 | 19 | 545 | 515 | 10 |
| 2 | 2,5% | - | 435 | 331 | 20 | 404 | 331 | 17 |
| 3 | 2,5% | 12h 155°C | 495 | 461 | 11 | 531 | 514 | 12 |
| 4 | 2,5% | 18h 155°C | 503 | 472 | 11 | 530 | 511 | 11 |
| 5 | 2,5% | 24h 155°C | 502 | 471 | 9 | 536 | 520 | 11 |

**Tableau 2 Résultat des essais de corrosion sous tension**

| Echantillon | Taux de traction après soudage | Revenu | Echantillon centré sur le cordon de soudure (sens TL) | | Echantillon dans le métal de base (sens TL) | |
|---|---|---|---|---|---|---|
| | | | σ =256 MPa | σ =295 MPa | σ =350 MPa | σ =450 MPa |
| 1 | 0% | 18h 155°C | >40 j | > 40 j | > 40j | > 40j |
| 2 | 2,5% | - | Non disponible | | | |
| 3 | 2,5% | 12h 155°C | > 40j | > 40j | > 40j | > 40j |
| 4 | 2,5% | 18h 155°C | > 40j | > 40j | > 40j | > 40j |
| 5 | 2,5% | 24h 155°C | > 40j | > 40j | > 40j | > 40j |

**Tableau 3. Résistance à la corrosion observée après le test Mastmaasis.**

| Echantillon | Classification | | | Mode de corrosion | | |
|---|---|---|---|---|---|---|
| | Métal de base | Zone affectée thermiquement | Noyau | Métal de base | Zone affectée thermiquement | Noyau |
| 1 | N | EB/EC | N | Transgranulaire | Feuilletante, dans certains, cas, corrosion généralisée sévère | Intergranulaire et transgranulaire |
| 2 | EA | ED | N | Intergranulaire | Exfoliation | Intergranulaire |
| 3 | N/EA | N/ EA | N | Transgranulaire | Transgranulaire | Transgranulaire |
| 4 | N/EA | N/EA | N | Transgranulaire | Transgranulaire | Transgranulaire |

| | | | | | | |
|---|---|---|---|---|---|---|
| Corrosion intergranulaire = corrosion localisée aux joints de grains. Corrosion transgranulaire = corrosion localisée à l'intérieur des grains. | | | | | | |

### Exemple 2

Comme dans l'exemple précédent, on a utilisé des tôles d'épaisseur 20 mm en alliage AA2050 à l'état T34, c'est-à-dire tractionnées après trempe d'environ 4%. Les tôles, positionnées bord à bord dans le sens long, ont été soudées par soudage par friction malaxage sur une profondeur d'environ 16 mm (échantillon 6 et échantillon 7).

La zone de soudure dont la largeur mesurée par mesure de micro-dureté était comprise entre 50 et 70 mm. Des prélèvements effectués dans les échantillons 6 et 7 ont ensuite subi une compression à l'aide d'un outil de largeur 80 mm dans la zone de soudure.

Les prélèvements, localement déformés à froid dans la zone de soudure ou pas, ont ensuite subi un traitement thermique de revenu à 155 °C d'une durée de 18h et ont été caractérisés par des essais de corrosion feuilletante selon le test Mastmaasis (norme ASTM G85 A2, conditions « dry bottom »), après un usinage de 1 à 11 mm à partir de la surface du joint soudé.

Les résultats obtenus sont présentés dans le Tableau 4

**Tableau 4. Résistance à la corrosion observée après le test Mastmaasis.**

| Echantillon | Taux de compression de la zone soudée | Profondeur d'observation par rapport à la surface du joint (mm) | Classification | | | Mode de corrosion | | |
|---|---|---|---|---|---|---|---|---|
| | | | Métal de base | Zone affectée thermique ment | Noyau | Métal de base | Zone affectée thermique ment | Noyau |
| 6 | 0% | 11 | P | EC | P | Transg | Feuilletant | Interg |
| 6 | 1,23% | 1 | P | P | P | Transg | Transg | Transg |
| 6 | 1,66% | 6,5 | P | P | P | Transg | Transg | Transg |
| 6 | 1,24% | 11 | P | EA | P | Transg | Transg | Transg |
| 7 | 0,60% | 1 | P | EA | P | Transg | Transg | Transg |
| 7 | 0,80% | 11 | P | EA | P | Transg | Transg | Transg |
| 7 | 0,83% | 1 | P | EA | P | Transg | Transg | Transg |
| 7 | 0,93% | 6,5 | P | EA | P | Transg | Transg | Transg |
| 7 | 0,88% | 11 | P | EA | P | Transg | Transg | Transg |
| 7 | 0,72% | 6,5 | P | P | P | Transg | Transg | Transg |

| | | | | | | | | |
|---|---|---|---|---|---|---|---|---|
| Transg : transgranulaire. Interg : Intergranulaire | | | | | | | | |

### Exemple 3

On a utilisé des tôles d'épaisseur 75 mm en alliage AA2050 à l'état T34, c'est-à-dire tractionnées après trempe d'environ 4%. Les tôles, positionnées bord à bord dans le sens long, ont été soudées par soudage par friction malaxage sur une profondeur d'environ 16 mm (échantillon 8 et échantillon 9, ce type de configuration est illustré par la Figure 2).

La largeur de la zone de soudure mesurée par essais de micro-dureté était comprise entre 50 et 70 mm. Des prélèvements effectués dans les échantillons 8 et 9 ont ensuite subi une compression à l'aide d'un outil de largeur 80 mm dans la zone de soudure.

Les prélèvements, faits dans la zone localement déformé à froid dans la zone de soudure ou pas, ont ensuite subi un traitement thermique de revenu à 155 °C d'une durée de 18h et ont été caractérisé par des essais de corrosion feuilletante selon le test Mastmaasis (norme ASTM G85 A2, conditions « dry bottom »), après un usinage de 0,2 à 10 mm à partir de la surface du joint soudé.

Les résultats obtenus sont présentés dans le Tableau 5.

**Tableau 5. Résistance à la corrosion observée après le test Mastmaasis.**

| Echantillon | Taux de compression de la zone soudée | Profondeur d'observation par rapport à la surface du joint (mm) | Classification | | | Mode de corrosion | | |
|---|---|---|---|---|---|---|---|---|
| | | | Métal de base | Zone affectée thermique ment | Noyau | Métal de base | Zone affectée thermique ment | Noyau |
| 8 | 0% | 0,2 | P | EA | P | Transg | Transg | Transg + Interg |
| 8 | 0% | 10 | P | EA | P | Transg | Transg | Transg + Interg |
| 8 | 0% | 18 | P | EA | P | Transg | Transg | Transg + interg |
| 8 | 1,25% | 0,2 | P | P | P | Transg | Transg | Transg |
| 8 | 0,71% | 0,2 | P | EA | P | Transg | Transg | Transg |
| 8 | 0,45% | 0,2 | P | EA | P | Transg | Transg | Transg |
| 8 | 0,47% | 10 | P | EA | P | Transg | Transg | Transg + interg |
| 8 | 1,31% | 10 | P | EA | P | Transg | Transg | Transg |
| 9 | 0,69% | 10 | P | EA | P | Transg | Transg | Transg |

| | | | | | | | | |
|---|---|---|---|---|---|---|---|---|
| Transg : transgranulaire - Interg : intergranulaire | | | | | | | | |

Avec le procédé selon l'invention, on n'observe pas de corrosion intergranulaire en surface (profondeur d'observation 0,2 mm) et on n'observe de la corrosion intergranulaire en profondeur (profondeur d'observation 10 mm) que dans le cas du plus faible taux de compression de la zone soudée (0,47%).

### Exemple 4

Dans cet exemple on a utilisé des tôles d'épaisseur 3 mm en alliage AA2198 à l'état T351. Les tôles, positionnées bord à bord dans le sens long, ont été soudées par soudage par friction malaxage. Par ailleurs, pour comparaison, deux tôles à l'état T851, ayant subit avant soudage une traction de 2% et un revenu de 14h à 155 °C ont été positionnées bord à bord dans le sens long et soudées par soudage par friction malaxage (Echantillon 12).

L'échantillon 11 a subi après soudage une traction de 2% tandis que l'échantillon 10 n'a pas subi de traction après soudage. Les assemblages soudés ont ensuite subi un revenu de 14h à 155 °C.

Les assemblages soudés ainsi obtenus ont été caractérisés par des essais de traction dans le sens TL (perpendiculairement à la soudure) et par des mesures de micro-dureté.

Les résultats obtenus pour les essais mécaniques sont présentés dans le Tableau 6. Les courbes de micro-dureté dans la zone soudée sont comparées pour les échantillons 10, 11 et 12 sur la figure 4. Les exemples selon l'invention présentent des propriétés mécaniques (Rm, R_{p0,2}) améliorées dans la zone soudée. La dureté Vickers de la zone soudée est inférieure d'environ 15% à celle de la zone non soudée pour l'échantillon selon l'invention alors qu'elle est inférieure d'environ 30% à 40% pour les échantillons de référence.

**Tableau 6. Caractéristiques mécaniques obtenues sur les différents échantillons d'assemblages soudés.**

| Echantillon | Taux de traction après soudage | revenu | Eprouvette perpendiculaire à la soudure (sens TL) L0=50 mm | | |
|---|---|---|---|---|---|
| | | | Rm (MPa) | Rp0.2 (MPa) | A. (%) |
| 10 | 0% | 14h 155°C | 371 | 259 | 1,6 |
| 11 | 2% | 14h 155°C | 398 | 314 | 1,4 |
| 12 | Traction 2% et revenu 14h 155°C avant soudage | | 369 | 262 | 1,1 |

## Revendications

1. Procédé d'assemblage de pièces (14a, 14b) en alliage d'aluminium, dans lequel
(i) on approvisionne au moins une première pièce (14a) en alliage d'aluminium dans un état mis en solution, trempé, optionnellement écroui, et vieilli naturellement à température ambiante ou ayant subi un pré-revenu, et au moins une seconde pièce (14b) en alliage d'aluminium,
(ii) on soude les dites pièces (14a, 14b) pour obtenir un assemblage soudé présentant une zone soudée délimitée par des limites (21) déterminées en surface et s'étendant dans toute l'épaisseur des pièces,
**caractérisé par** les étapes suivantes :
(iii) on réalise une déformation à froid comprise entre 0,3 et 5 % de l'ensemble de ladite zone soudée délimitée par lesdites limites (21),
(iv) on réalise un revenu post-soudage de l'assemblage soudé ainsi déformé pour obtenir un état métallurgique final, les conditions de revenu étant une température de 120 à 200 °C pendant une durée de 10 à 60 heures,
et si l'état métallurgique de la première pièce (14a) au moins est dans un état pré-revenu, l'état métallurgique, obtenu après le revenu post-soudage, est le résultat du pré-revenu de la première pièce (14a) au moins et du revenu post-soudage.

2. Procédé selon la revendication 1 dans lequel la dite déformation à froid est réalisée par traction contrôlée de l'assemblage soudé.

3. Procédé selon la revendication 2 dans lequel la dite première pièce (14a) est avant soudage dans un état T4 ou dans un état T3 écroui de moins de 1%.

4. Procédé selon la revendication 1 dans lequel ladite déformation à froid est réalisée localement typiquement par compression.

5. Procédé selon la revendication 4 dans lequel la dite première pièce (14a) est avant soudage dans un état T3, avec un écrouissage réalisé avant soudage de préférence compris entre 2 et 5%.

6. Procédé selon la revendication 4 ou la revendication 5 dans lequel ladite déformation à froid réalisée localement est comprise entre 0,6 et 2 %.

7. Procédé selon une quelconque des revendications 1 à 6 dans lequel ladite première pièce (14a) est en alliage d'aluminium de la série 2XXX.

8. Procédé selon la revendication 7 dans lequel le dit alliage de la série 2XXX est un alliage Al-Cu-Li.

9. Procédé selon une quelconque des revendications 1 à 8 dans lequel ledit état métallurgique final est un état T8 ou T8X.

10. Procédé selon une quelconque des revendications 1 à 10 dans lequel le soudage est effectué par la technique de soudage par friction malaxage.

11. Assemblage soudé comprenant des pièces (14a, 14b) en alliage d'aluminium soudées entre elles et présentant une zone soudée délimitée par des limites (21) déterminées en surface et s'étendant dans toute l'épaisseur des pièces,
**caractérisé en ce que**
l'assemblage soudé possède un état métallurgique final susceptible d'être obtenu par le procédé selon une quelconque des revendications 1 à 10, ledit procédé comprenant les étapes suivantes
(i) on réalise une déformation à froid comprise entre 0,3 et 5 % de l'ensemble de ladite zone soudée délimitée par lesdites limites (21),
(ii) on réalise un revenu post-soudage de l'assemblage soudé ainsi déformé pour obtenir un état métallurgique final,
si l'état métallurgique d'au moins une première pièce (14a) est un état pré-revenu, l'état métallurgique, obtenu après le revenu post-soudage, est le résultat du pré-revenu de la première pièce au moins et du revenu post-soudage.

12. Assemblage soudé selon la revendication 11 dans lequel la résistance à la corrosion selon le test Mastmaasis, effectué d'après la norme ASTM G85 A2 n'est pas inférieure à EA, sans présence de corrosion intergranulaire.

13. Assemblage soudé selon la revendication 11 ou la revendication 12 dans lequel les pièces assemblées (14a, 14b) sont en alliage choisi dans la liste constituée de AA2022, AA2094, AA2098, AA2198, AA2195, AA2196, AA2050, AA2039, AA2124, AA2139, AA2219 et AA2297 et dans lequel la micro-dureté Vickers dans la zone soudée délimitée par lesdites limites (21) est inférieure d'un facteur d'au plus 20% à la micro-dureté dans la zone non soudée.

14. Assemblage soudé selon l'une quelconque des revendications 11 à 13 dans lequel l'efficacité du joint soudé (16, 18, 19), correspondant au rapport entre la résistance à la rupture du joint soudé sollicité perpendiculairement à la direction de soudure et celle de la tôle non soudée ou dans une zone éloignée de la zone soudée (14a, 14b), est d'au moins 70%.

15. Utilisation d'un assemblage soudé selon une quelconque des revendications 11 à 14 pour la réalisation d'un véhicule de transport.

16. Utilisation selon la revendication 15 dans la construction aéronautique pour la fabrication d'éléments de structure.

## Patentansprüche

1. Verfahren zur Montage von Aluminiumlegierungsteilen (14a, 14b), bei dem
(i) man mindestens ein Aluminiumlegierungsteil (14a), das sich in einem lösungsgeglühten, abgeschreckten, wahlweise kaltumgeformten, und bei Raumtemperatur ausgelagerten Zustand befindet bzw. einer Vorauslagerungsbehandlung unterzogen wurde, und mindestens ein zweites Aluminiumlegierungsteil (14b) bereitstellt,
ii) man die Teile (14a, 14b) verschweißt, um einen Schweißverbund mit einer Schweißzone zu erhalten, die durch oberflächenseitig festgelegte Begrenzungen (21) abgegrenzt ist und sich durch die gesamte Dicke der Teile erstreckt,
**gekennzeichnet durch** die folgenden Schritte:
iii) man führt eine Kaltverformung von 0,3 bis 5 % der gesamten, durch die Begrenzungen (21) abgegrenzten Schweißzone durch,
iv) man führt nach dem Schweißen eine Auslagerungsbehandlung des gesamten umgeformten Schweißverbunds durch, um einen metallurgischen Endzustand zu erhalten, wobei es sich bei den Auslagerungsbedingungen um eine Temperatur von 120 bis 200 °C für einen Zeitraum von 10 bis 60 Stunden handelt,
und wenn der metallurgische Zustand wenigstens des ersten Teils (14a) ein vorausgelagerter Zustand ist, ist der metallurgische Zustand, der nach der Auslagerungsbehandlung nach dem Schweißen erhalten wird, das Ergebnis der Vorauslagerungsbehandlung wenigstens des ersten Teils (14a) und der Auslagerungsbehandlung nach dem Schweißen.

2. Verfahren nach Anspruch 1, bei dem die Kaltverformung durch kontrolliertes Recken des Schweißverbunds erfolgt.

3. Verfahren nach Anspruch 2, bei dem das erste Teil (14a) vor dem Schweißen in einem Zustand T4 bzw. in einem um weniger als 1 % kaltumgeformten Zustand T3 ist.

4. Verfahren nach Anspruch 1, bei dem die Kaltverformung örtlich typischerweise durch Druck erfolgt.

5. Verfahren nach Anspruch 4, bei dem das erste Teil (14a) vor dem Schweißen in einem Zustand T3 ist, mit einer vor dem Schweißen durchgeführten Kaltumformung von vorzugsweise 2 bis 5 %.

6. Verfahren nach Anspruch 4 oder Anspruch 5, bei dem die örtlich durchgeführte Kaltverformung 0,6 bis 2 % beträgt.

7. Verfahren nach irgendeinem der Ansprüche 1 bis 6, bei dem das erste Teil (14a) aus einer Aluminiumlegierung der Serie 2XXX besteht.

8. Verfahren nach Anspruch 7, bei dem die Legierung der Serie 2XXX eine Al-Cu-Li-Legierung ist.

9. Verfahren nach irgendeinem der Ansprüche 1 bis 8, bei dem der metallurgische Endzustand ein Zustand T8 oder T8X ist.

10. Verfahren nach irgendeinem der Ansprüche 1 bis 10, bei dem das Schweißen mittels der Reibrührschweißtechnik durchgeführt wird.

11. Schweißverbund, welcher miteinander verschweißte Aluminiumlegierungsteile (14a, 14b) umfasst und eine Schweißzone aufweist, die durch oberflächenseitig festgelegte Begrenzungen (21) abgegrenzt ist und sich durch die gesamte Dicke der Teile erstreckt,
**dadurch gekennzeichnet, dass**
der Schweißverbund einen metallurgischen Endzustand aufweist, der durch das Verfahren nach irgendeinem der Ansprüche 1 bis 10 erhalten werden kann, wobei das Verfahren die folgenden Schritte umfasst:
(i) man führt eine Kaltverformung von 0,3 bis 5 % der gesamten, durch die Begrenzungen (21) abgegrenzten Schweißzone durch,
ii) man führt nach dem Schweißen eine Auslagerungsbehandlung des gesamten umgeformten Schweißverbunds durch, um einen metallurgischen Endzustand zu erhalten,
wenn der metallurgische Zustand wenigstens eines ersten Teils (14a) ein vorausgelagerter Zustand ist, ist der metallurgische Zustand, der nach der Auslagerungsbehandlung nach dem Schweißen erhalten wird, das Ergebnis der Vorauslagerungsbehandlung wenigstens des ersten Teils und der Auslagerungsbehandlung nach dem Schweißen.

12. Schweißverbund nach Anspruch 11, bei dem die Korrosionsfestigkeit gemäß dem nach ASTM G85 A2 durchgeführten MASTMAASIS-Test EA nicht unterschreitet, ohne Vorhandensein von interkristalliner Korrosion.

13. Schweißverbund nach Anspruch 11 oder Anspruch 12, bei dem die zusammengefügten Teile aus einer Legierung bestehen, die ausgewählt ist aus der Liste bestehend aus AA2022, AA2094, AA2098, AA2198, AA2195, AA2196, AA2050, AA2039, AA2124, AA2139, AA2219 und AA2297, und bei dem die Mikrohärte nach Vickers in der durch die Begrenzungen (21) abgegrenzten Schweißzone um einen Faktor von höchstens 20 % geringer ist als die Mikrohärte in der nicht verschweißten Zone.

14. Schweißverbund nach irgendeinem der Ansprüche 11 bis 13, bei dem die Wirksamkeit der Schweißverbindung (16, 18, 19), die dem Verhältnis zwischen der Bruchfestigkeit der senkrecht zur Schweißrichtung belasteten Schweißverbindung und der Bruchfestigkeit des nicht verschweißten Blechs oder in einem von der Schweißzone (14a, 14b) entfernten Bereich entspricht, mindestens 70 % beträgt.

15. Verwendung eines Schweißverbunds nach irgendeinem der Ansprüche 11 bis 14 für die Herstellung eines Transportfahrzeugs.

16. Verwendung nach Anspruch 15 im Flugzeugbau für die Herstellung von Strukturbauteilen.

## Claims

1. Process for joining components (14a, 14b) made of aluminium alloy, wherein
(i) at least one first component (14a) made of aluminium alloy in a solution heat-treated, quenched, optionally strain hardened, temper, and naturally aged at ambient temperature or having undergone pre-ageing, and at least one second component (14b) made of aluminium alloy are supplied,
(ii) said components (14a, 14b) are welded to obtain a welded assembly having a welded zone delimited by boundaries (21) determined on the surface and extending throughout the thickness of the components,
**characterised by** the following steps:
(iii) cold working between 0.3 and 5% of all of said welded zone delimited by said boundaries (21) is carried out,
(iv) post-welding ageing of the worked welded assembly is carried out to obtain a final temper, the ageing conditions being a temperature from 120 to 200°C for a time from 10 to 60 hours,
and if the temper of the first component (14a) at least is in a pre-aged temper, the temper, obtained after the post-welding ageing, is the result of the pre-ageing of the first component (14a) at least and of the post-welding ageing.

2. Process according to claim 1 wherein said cold working is carried out by controlled stretching of the welded assembly.

3. Process according to claim 2 wherein said first component (14a) is prior to welding in a T4 temper or in a strain hardened T3 temper of less than 1%.

4. Process according to claim 1 wherein said cold working is carried out locally typically by compression.

5. Process according to claim 4 wherein said first component (14a) is prior to welding in a T3 temper, with strain hardening carried out prior to welding preferably between 2 and 5%.

6. Process according to claim 4 or claim 5 wherein said cold working carried out locally is between 0.6 and 2%.

7. Process according to any one of claims 1 to 6 wherein said first component (14a) is made of 2XXX series aluminium alloy.

8. Process according to claim 7 wherein said 2XXX series alloy is an Al-Cu-Li alloy.

9. Process according to any one of claims 1 to 8 wherein said final temper is a T8 or T8X temper.

10. Process according to any one of claims 1 to 10 wherein the welding is carried out by means of the friction stir welding technique.

11. Welded assembly comprising components (14a, 14b) made of aluminium alloy welded to one another and having a welded zone delimited by boundaries (21) determined on the surface and extending throughout the thickness of the components,
**characterised in that**
the welded assembly has a final temper suitable for being obtained by means of the process according to any one of claims 1 to 10, said process comprising the following steps
(i) cold working between 0.3 and 5% of all of said welded zone delimited by said boundaries (21) is carried out,
(ii) post-welding ageing of the worked welded assembly is carried out to obtain a final temper,
if the temper of the first component (14a) at least is a pre-aged temper, the temper, obtained after the post-welding ageing, is the result of the pre-ageing of the first component at least and of the post-welding ageing.

12. Welded assembly according to claim 11 wherein the corrosion resistance according to the Mastmassis test, carried out as per the standard ASTM G85 A2 is not less than EA, with no presence of intergranular corrosion.

13. Welded assembly according to claim 11 or claim 12 wherein the joined components (14a, 14b) are made of alloy selected in the list consisting of AA2022, AA2094, AA2098, AA2198, AA2195, AA2196, AA2050, AA2039, AA2124, AA2139, AA2219 and AA2297 and wherein the Vickers micro-hardness in the welded zone delimited by said boundaries (21) is less by a factor of at most 20% than the micro-hardness in the non-welded zone.

14. Welded assembly according to any one of claims 11 to 13 wherein the efficiency of the welded joint (16, 18, 19), corresponding to the ratio between the rupture strength of the welded joint stressed perpendicularly to the welding direction and that of the non-welded sheet or in a zone at a distance from the welded zone (14a, 14b), is at least 70%.

15. Use of a welded assembly according to any one of claims 11 to 14 for producing a transport vehicle.

16. Use according to claim 15 in aircraft construction for manufacturing structural elements.
